# EUROPÄISCHE PATENTANMELDUNG

(11) **EP 4 060 881 A1**
(43) Veröffentlichungstag der Anmeldung: **21.09.2022**
(21) Anmeldenummer: 21162851.6
(22) Anmeldetag: 16.03.2021
(51) Int. Cl.: H02K 15/00, H02K 17/16

(54) **VERFAHREN ZUR HERSTELLUNG EINES KURZSCHLUSSLÄUFERS MIT GESCHICHTETEM KURZSCHLUSSRING**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Die Erfindung betrifft ein Verfahren zur Herstellung eines Kurzschlussläufers (5) einer Asynchronmaschine (1) durch folgende Schritte:
- Bereitstellen eines Blechpakets (9) des Läufers (5) mit im Wesentlichen axial verlaufenden Nuten (14),
- einsetzen von Leiterstäben (6) in die Nuten (14) aus einem ersten leitfähigen Material, derart, dass die Leiterstäbe (6) aus den Stirnseiten (15) des Blechpakets (9) ragen,
- Bereitstellen einer vorgebbaren Anzahl von vorgestanzten Einzelblechen (8) mit jeweils vorgegebener Kontur aus einem zweiten leitfähigen Material,
- einzelnes axiales Aufpressen (10) dieser Einzelbleche (8) nacheinander, auf die aus der Stirnseite (15) des Blechpakets (9) ragenden Leiterstäbe (6), wobei die Einzelbleche (8) die aus einer Stirnseite (15) ragenden Leiterstäbe (6) kurzschließen und somit einen Kurzschlussring (7) bilden.

## Beschreibung

Die Erfindung betrifft ein Verfahren zur Herstellung eines Kurzschlussläufers mit geschichtetem Kurzschlussring einer Asynchronmaschine, als auch die Asynchronmaschine selbst und deren Verwendung bei unterschiedlichen, vorzugsweise industriellen Anwendungen.

Ein Läufer bzw. Rotor bei elektrischen Asynchronmaschinen, also insbesondere Kurzschlussläufer, weisen überwiegend gestapelte Elektrobleche mit Nuten auf. Darin sind elektrische Leiter aus Aluminium bzw. Kupfer. Die Enden der Leiter sind außerhalb des Blechpakets durch einen Kurzschlussring verbunden.

Kurzschlussläufer dynamoelektrischer rotatorischer Maschinen werden im niedrigeren Leistungsbereich (bis ca. 1 MW) in Druckgusstechnik in einem Arbeitsgang hergestellt. Dieses stoffschlüssige Verfahren ist kostenintensiv, da die Druckgussformen teuer sind und vergleichsweise schnell verschleißen. Des Weiteren ist bei der Herstellung eine vergleichsweise hohe Streuung in der Qualität eines derartig hergestellten Kurzschlussläufers vorhanden. Dies äußert sich beispielsweise in der Veränderung der Qualität der Schmelze im Tiegel, durch Verunreinigungen der Schmelze während des Gießprozesses, durch Trennmittel bzw. Abrasion am Werkzeug, ebenso wie durch Lunkerbildung oder Spannungsrissbildung bei Abkühlung des Druckgusses.

Um die, auch bei niedrigen Leistungsbereich, auftretenden Qualitätsverluste zu beheben, wird beispielsweise unter Schutzgaseinfluss der Druckgussvorgang durchführt. Ebenso werden Werkzeuge mit mehreren Entlüftungsmöglichkeiten vorgesehen, oder es wird sogar ein Nachlegieren der Schmelze durchgeführt. Diese Eingriffe ermöglichen die Steigerung der Effizienz des Asynchronkäfigläufers, jedoch sind zur Festigkeit zusätzliche Maßnahmen notwendig, die insbesondere eine hohe Drehzahltauglichkeit beinhalten, wie z.B. Stützringe oder Einsatz von Legierungen, um höhere Festigkeitswerte zu erhalten.

Im höheren Leistungsbereich oder bei Sonderanwendungen dynamoelektrischer rotatorischer Maschinen, werden einzelne Leiterstäbe mit einem Kurzschlussring elektrisch und mechanisch verbunden. Dies geschieht beispielsweise durch Löt- oder Schweißvorgänge, wie dies der DE 34 13 519 C2 und der US 9 570 968 B1 zu entnehmen ist.

Nachteilig dabei ist jedoch, insbesondere bei Lötvorgängen, dass bei diesen größeren dynamoelektrischen Maschinen Kurzschlussringe vorhanden sind, die eine umlaufende Lötwanne aufweisen, die beim Lötprozess komplett mit Lot zu füllen ist. Dabei wird lediglich das Volumen, des in die Lötwanne ragenden Volumen der Läuferstäbe, nicht mit Lot gefüllt. Aufgrund des hohen Silberanteils im Lot ist dabei unter anderem eine Herstellung der Lötverbindung zwischen Läuferstäben und Kurzschlussring wirtschaftlich nicht besonders sinnvoll.

Aus der EP 3 402 057 A1 ist bekannt, Kurzschlussringe mit hohen axialen Kräften auf Leiterstabenden zu pressen. Dazu sind sehr hohe axiale Kräfte notwendig, um eine ausreichende Kontaktierung zwischen Leiterstab und Kurzschlussring zu erhalten. Bei im Blechpaket schräg angeordneten Leiterstäben - aufgrund einer Nutschrägung um Rastmomente zu verringern - besteht die Gefahr des Knickens der Leiterstäbe.

Ausgehend davon liegt der Erfindung die Aufgabe zugrunde, ein Verfahren zur Herstellung eines Kurzschlussläufers einer Asynchronmaschine bereitzustellen, das die oben genannten Nachteile vermeidet. Des Weiteren soll der geschaffene Kurzschlussläufer vergleichsweise gute elektrische Eigenschaften aufweisen, als auch in wirtschaftlicher Art und Weise herstellbar sein. Des Weiteren soll eine damit ausgestattete Asynchronmaschine mit hoher Effizienz für die unterschiedlichsten industriellen Anwendungen, insbesondere bei Verdichtern und Kompressoren bereitgestellt werden.

Die Lösung der gestellten Aufgabe gelingt durch ein Verfahren zur Herstellung eines Kurzschlussläufers einer Asynchronmaschine durch folgende Schritte:
- Bereitstellen eines Blechpakets des Läufers mit im Wesentlichen axial verlaufenden Nuten,
- einsetzen von Leiterstäben in die Nuten aus einem ersten leitfähigen Material, derart, dass die Leiterstäbe aus den Stirnseiten des Blechpakets ragen,
- Bereitstellen einer vorgebbaren Anzahl von vorgestanzten Einzelblechen mit jeweils vorgegebener Kontur aus einem zweiten leitfähigen Material,
- einzelnes, axiales Aufpressen dieser Einzelbleche nacheinander, auf die aus der Stirnseite des Blechpakets ragenden Leiterstäbe, wobei die Einzelbleche die aus einer Stirnseite ragenden Leiterstäbe kurzschließen und somit einen Kurzschlussring bilden.

Die Lösung der gestellten Aufgabe gelingt auch durch einen Kurzschlussläufer hergestellt nach dem erfindungsgemäßen Verfahren, wobei der Kurzschlussring direkt am Blechpaket anliegt oder davon beabstandet ist.

Die Lösung der gestellten Aufgabe gelingt auch durch eine Asynchronmaschine mit einem erfindungsgemäßen Kurzschlussläufer.

Die Lösung der gestellten Aufgabe gelingt auch durch ein Antriebssystem, insbesondere für Kompressoren, Verdichter, Förderanlagen, oder Fahrzeugantriebe mit zumindest einer erfindungsgemäßen Asynchronmaschine.

Durch das erfindungsgemäße Verfahren wird in einfacher Art und Weise ein Verfahren bereitgestellt, das den Herstellungsaufwand für leistungsfähige Kurzschlussläufer wesentlich reduziert. So sind für das axiale Aufpressen der Einzelbleche auf die Leiterstäbe vergleichsweise geringe Kräfte notwendig. Des Weiteren sind thermische Prozesse nur optional vorgesehen, so dass keine Aufheizphasen und Abkühlzeiten im Herstellungsprozess vorzusehen sind. Damit werden Kontaktverbindungen zwischen Leiterstab und Einzelblech mit vergleichsweise hoher elektrischer Leitfähigkeit geschaffen, was auch thermische Verluste im Kurzschlussring reduziert.

Das Verfahren kann somit auch in einfacher Art und Weise automatisiert werden.

Diese Kontaktverbindungen zwischen Leiterstab und Einzelblech sind somit mit einem geringen elektrischen Widerstand ausgestattet, der auch über die Lebensdauer der Asynchronmaschine bestehen bleibt.

Bei dem erfindungsgemäßen Verfahren werden die insbesondere gestanzte Einzelbleche, die dann in Summe den Kurzschlussring bilden, im kalten Zustand, also bei Raumtemperatur oder Umgebungstemperatur mit Übermaß auf die Leiterstäbe axial aufgepresst. Durch das axiale Aufpressen der Einzelbleche wird im Vergleich zum Aufpressen eines gesamten Kurzschlussrings die axiale Fügekraft aufgesplittet und somit wesentlich reduziert. Die Fügekraft liegt beispielsweise für Läufer in der Achshöhe 100 somit unter 50 kN. Das Übermaß von Leiterstab zur Ausnehmung im Einzelblech kann somit höher angesetzt werden, was vor allem eine langlebige Kontaktverbesserung zwischen Leiterstab und Einzelblechen bewirkt.

Damit die thermischen Verluste weiter reduziert werden, werden die Leiterstäbe, vorzugsweise Kupferstäbe, nach dem axialen Einsetzen in die Nuten durch das axiale Aufpressen der Einzelbleche gestaucht, und damit zumindest abschnittsweise ein Anliegen an die Seitenwänden der Nut herbeigeführt. Alternativ dazu können die Leiterstäbe nicht nur axial gestaucht, sondern auch - sofern vorhanden - über einen Nutschlitz der Nut verstemmt werden.

Die Einzelbleche beispielsweise aus Aluminium (Al) oder Kupfer (Cu) können im Stanzverfahren hergestellt werden und haben somit die in der Stanztechnik üblich hohe Genauigkeit im pm-Bereich. Damit kann das Übermaß zwischen Leiterstab und Ausnehmung des Einzelblechs exakt eingestellt werden.

In einer Ausführung sind die Ausnehmungen der Einzelbleche in Umfangsrichtung geschlossen, was die Kontaktierung zusätzlich verbessert. Bei einer stranggepressten Kurzschlussscheibe ist dies nicht möglich.

Selbstverständlich können die Ausnehmungen der Einzelbleche aber auch mit einem radialen nach außen weisenden Schlitz versehen sein.

In einer weiteren Ausführung werden die Leiterstäbe, zumindest aber die späteren Überstände der Leiterstäbe aus dem Blechpaket des Läufers, mit einer galvanischen Schicht aus Al, Zinn oder einer lötbaren Legierung beschichtet.

Diese Beschichtung hat mehrere Funktionen:
Sie verhindert eine Oxidation an der Oberfläche der Leiterstäbe, insbesondere wenn es sich um Leiterstäbe aus Kupfer handelt. Diese Oxidation würde den elektrischen Widerstand beim Übergang von Leiterstab auf das oder die Einzelbleche des Kurzschlussrings vergrößern, was zu unnötigen Wärmeverlusten im Kurzschlussring führen würde.

Des Weiteren dient diese Beschichtung als Schmierschicht beim axialen Aufschieben der Einzelbleche auf die Überstände der Leiterstäbe. Diese Beschichtung nutzt sich dabei, wie Versuche gezeigt haben, durch das serielle Fügen der Einzelbleche kaum ab, so dass auch das "letzte" aufzuschiebende Einzelblech eine ausreichende Schmierschicht auf den Überständen vorfindet. Somit ist auch beim axialen Fügen des äußeren letzten Einzelbleches noch eine ausreichende Beschichtung auf den Überständen der Leiterstäbe vorhanden.

Optional kann die verbleibende Schicht an den zu verbindenden Flächen- Innenseite Ausnehmung Einzelblech und korrespondierende Außenseite Überstand der Leiterstäbe - für einen Diffusionsprozess genutzt werden. Dazu werden die kalt, bzw. bei Umgebungstemperatur aufgepressten Einzelbleche durch eine außen angelegte Induktionsspule kurzzeitig erhitzt.

Der Kurzschlussring aus Einzelblechen wird dabei auf eine Temperatur aufgeheizt, die höher liegt als der Schmelzpunkt der Beschichtung. Bei einer Beschichtung mit Zinn wäre dies im Bereich 300°C.

Die Schicht verflüssigt sich kurz und erstarrt wieder. Die im µm-Bereich betrachteten unebenen Stanzflächen in der Ausnehmung der Einzelbleche werden durch diesen Vorgang ausgeglichen. Die Anlagefläche der Ausnehmung jedes Einzelbleches zum Überstand des Leiterstabes wird somit im Kurzschlussringbereich vollflächig. Zudem kommt es zu Diffusionsvorgängen zwischen der Beschichtung der Leiterstäbe und den Einzelblechen des Kurzschlussrings, die eine Verbesserung der elektrischen Verbindung zwischen den Leiterstäben und den Einzelblechen bewirken.

Bei der Herstellung der Einzelbleche, insbesondere durch Stanzwerkzeuge, kann je nach Anforderung, ohne großen Aufwand, die Blechdicke und/oder der Durchmesser als auch die Anzahl und/oder Kontur der Ausnehmungen eingestellt werden.

Vorzugsweise sind diese Einzelbleche mit ihrem Innendurchmesser gleich oder größer als der Wellendurchmesser und/oder kleiner oder gleich als der Außendurchmesser des Blechpakets des Läufers.

Durch direkten Kontakt der Einzelbleche, also des Kurzschlussringes mit der Welle, könnte im Betrieb der Asynchronmaschine Wärme über die Welle nach außen abgegeben werden.

Mit diesem Verfahren, "kaltes" Aufpressen der Einzelbleche auf Enden von Leiterstäben zur Schaffung eines geschichteten Kurzschlussringes eines Kurzschlussläufers einer Asynchronmaschine, können auch geschrägte Läuferblechpakete hergestellt werden. Durch die reduzierte Fügekraft im Vergleich zum Fügen eines gesamten Kurzschlussrings wird vermieden, dass die schräg aus dem Paket herausragenden Leiterstäbe während des Fügevorganges abknicken oder sich verbiegen. Die Schrägung über die axiale Länge des Läuferblechpakets beträgt dabei das 0,3- bis 3-fache einer Nutteilung des Läufers - also des umfänglichen Abstandes zwischen zwei benachbarten Nuten.

Durch das erfindungsgemäße Verfahren lassen sich auch axial vom Blechpaket beabstandete Kurzschlussringe herstellen. Dies geschieht entweder, indem der Überstand einen Anschlag aufweist, oder indem die einstellbare axiale Fügekraft und ein einstellbarer axialer Fügeweg die Einzelbleche axial genau auf dem Überstand der Leiterstäbe positioniert.

Grundsätzlich stellt sich bei jeder der genannten Ausführungen ein elektrisch gut leitfähiger Kontakt zwischen den Einzelblechen und den Leiterstäben ein. Ein elektrisch leitfähiger Kontakt axial zwischen den jeweiligen Einzelblechen eines Kurzschlussrings wird nicht angestrebt und wird sich, wenn überhaupt nur in einem vergleichsweise geringen Maße einstellen, der aber für den Betrieb einer Asynchronmaschine von untergeordneter Bedeutung ist.

Ein derartig hergestellter Kurzschlussläufer ergibt einen vergleichsweise hohen Wirkungsgrad einer Asynchronmaschine und damit einen effizienten Antrieb für eine Vielzahl von industriellen Anwendungen wie Verdichter und Kompressoren.

Die Erfindung sowie weitere vorteilhafte Ausgestaltungen der Erfindung wurden anhand prinzipiell dargestellter Ausführungsbeispiele näher erläutert; darin zeigen:
- FIG 1: einen prinzipiellen Längsschnitt einer elektrischen Asynchronmaschine mit Kurzschlussläufer,
- FIG 2: einen prinzipiellen Herstellervorgang,
- FIG 3: eine perspektivische Darstellung des Herstellervorgangs,
- FIG 4: einen prinzipiellen Herstellervorgang bei axial schräg verlaufenden Nuten,
- FIG 5: ein Kurzschlussläufer auf einer Welle,
- FIG 6, 7: Darstellung des Übermaßes der Bleche an den Leiterstäben.

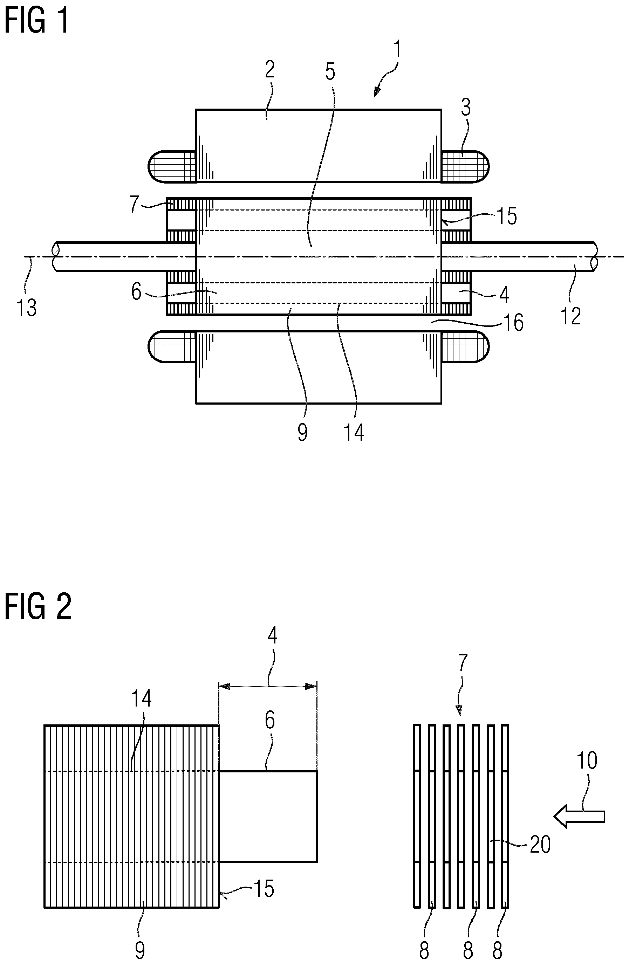

FIG 1 zeigt in einer prinzipiellen Darstellung eine elektrische Asynchronmaschine 1 mit einem Stator 2, an dessen Stirnseiten sich Wickelköpfe eines Wicklungssystems 3 befinden, das in, im Wesentlichen axial verlaufenden Nuten des Stators 2 angeordnet ist. Radial vom Stator 2 beabstandet und von einem Luftspalt 16 getrennt ist ein Läufer 5 bzw. Rotor 5 angeordnet, der als Kurzschlussläufer ausgeführt ist.

Dabei sind in, im Wesentlichen axial verlaufenden Nuten 14 eines Blechpakets 9 des Läufers 5, Leiterstäbe 6 angeordnet, die an den Stirnseiten 15 des Läufers 5 axial überstehen. Unter im Wesentlichen axial verlaufenden Nuten 14 werden dabei Nuten 14 verstanden, die in ihrem axialen Verlauf keine Schrägung aufweisen, also achsparallel verlaufen oder eine Schrägung der Nuten 14 in ihrem axialen verlauf aufweisen, der bis zu dem 3-fache einer Nutteilung ausmacht.

An diesen Überständen 4 sind Kurzschlussringe 7 positioniert, die die einzelnen Leiterstäbe 6 auf einer Stirnseite 15 kurzschließen. Die Kurzschlussringe 7 sind, wie in diesem Fall, zusätzlich mit einer Welle 12 kontaktiert, um eine Wärmeableitung über die Welle 12 zu ermöglichen.

Ebenso sind aber Ausführungen möglich, bei denen der Kurzschlussring 7 nicht mit der Welle 12 in Verbindung steht.

Der Kurzschlussring 7 ist grundsätzlich bei den oben genannten Ausführungen aus Einzelblechen 8 aufgebaut, die auf die axialen Überstände 4 der Leiterstäbe 6 einer Stirnseite 15 geschoben wurden, wie dies im Folgenden noch näher beschrieben wird.

Durch elektromagnetische Wechselwirkung des bestromten Wicklungssystems 3 des Stators 2 mit dem Läufer 5 wird der mit der Welle 12 drehfest verbundene Läufer 5 in Drehung um eine Achse 13 versetzt. Damit sind Arbeitsmaschinen u.a. Verdichter, Förderbänder oder Kompressoren antreibbar.

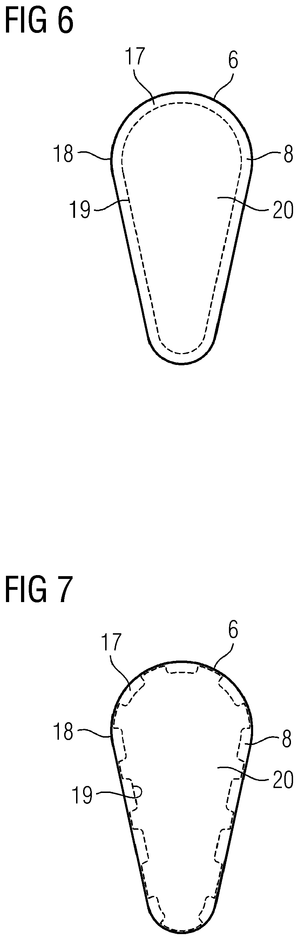

FIG 2 zeigt in einer prinzipiellen Darstellung, wie der Herstellungsvorgang eines Kurzschlussrings 7 prinzipiell von statten geht. Auf den Überstand 4 der Leiterstäbe 6, die aus der Stirnseite 15 des Blechpakets 9 des Läufers 5 ragen, werden die Einzelbleche 8 mit vergleichsweise geringer axialer Fügekraft axial aufgesetzt. Dabei weisen die Leiterstäbe 6 bezüglich der jeweiligen Öffnungen der Einzelbleche 8 ein Übermaß 17 auf, wie dies beispielsweise auch der FIG 6 und FIG 7 zu entnehmen ist.

Vorteilhafterweise können dabei sogar die Leiterstäbe 6 innerhalb des Blechpakets 9 des Läufers 5 schräg verlaufen, ohne dass durch den axialen Fügevorgang 10 die Leiterstäbe 6 knicken.

Die Schrägung eines Leiterstabes 6 über die axiale Länge des Blechpakets 9 des Läufers 5 betrachtet, kann dabei bis zu 3 Nutteilungen betragen. Eine Nutteilung ist, in Umfangsrichtung betrachtet, dabei der Abstand zwischen zwei benachbarten Nuten 14 des Läufers 5.

Somit wird nunmehr der Kurzschlussring 7 axial betrachtet aus mehreren Einzelblechen 8 aufgebaut, die jeweils in gut leitenden elektrischen Kontakt mit den Leiterstäben 6 stehen. Ein elektrisch gut leitfähiger Kontakt axial zwischen den Einzelblechen 8 auf einer Stirnseite 15 ist nicht notwendig und muss daher auch nicht durch zusätzliche Schweißvorgänge bzw. Lötvorgänge unterstützt werden, was den Aufbau eines Kurzschlussläufers wesentlich vereinfacht. Die Kontaktierung der Leiterstäbe 6 durch die jeweiligen Einzelbleche 8 ist allein ausreichend, um einen funktionsfähigen Kurzschlussläufer für eine Asynchronmaschine 1 mit vergleichsweise hohem Wirkungsgrad zu schaffen.

Der Kurzschlussring 7 besteht somit aus Einzelblechen 8. Somit ist die Fügekraft beim Herstellungsvorgang des Kurzschlussrings aufgesplittet und kann mit vergleichsweise kleinem Equipment, wie Pressen etc. erfolgen, da die erforderlichen Fügekräfte vergleichsweise gering sind. Damit können nunmehr auch geschrägte Rotorpakete, also Blechpakete 9 mit Schrägung der Nuten 14 in einfacher Art und Weise hergestellt werden, ohne dass die Gefahr der Knickung der Leiterstäbe 6 im Bereich des Überstandes 4 besteht.

Eine Beschichtung der Leiterstäbe 6, insbesondere der Kupferstäbe, gewährleistet eine Vermeidung einer Oxidschicht und ist vorteilhaft bezüglich dem Fügeverfahren und den Verknüpfungsflächen von Leiterstab 6 zu den jeweiligen Einzelblechen 8 des Kurzschlussringes 7.

Durch die zumindest abschnittsweise erfolgte Presspassung zwischen Leiterstab 6 und Ausnehmung 20 in den Einzelblechen 8 wird eine Dauerfestigkeit der Verbindung auch unter thermischen Lastspielen einer Asynchronmaschine gewährleistet.

Lässt man die Leiterstäbe 6 über die Kurzschlussringe 7 überstehen, so dienen diese als Lüfterflügel im Betrieb der Asynchronmaschine. Dabei ist die axiale Dicke des Kurzschlussringes 7, also der gestapelten Einzelbleche 8 geringer als der Überstand 4. Die Verlustwärme wird dabei direkt axial aus den Heißzonen des Läufers 5 herausgeführt.

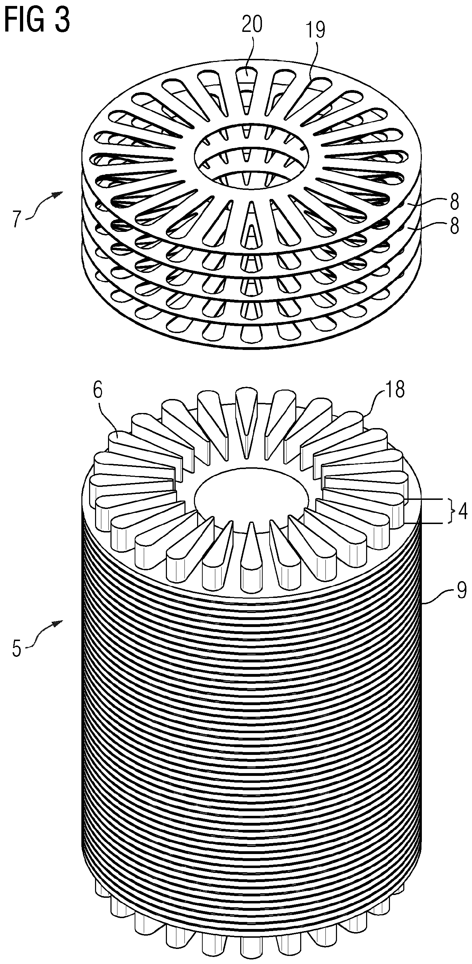

FIG 3 zeigt in einer perspektivischen Darstellung den Läufer 5 mit seinem Blechpaket 9 und den Überständen 4 der Leiterstäbe 6 an der Stirnseite 15 des Blechpakets 9. Auf diese Überstände 4 werden nunmehr, um einen Kurzschlussring 7 zu erhalten, die Einzelbleche 8 axial auf die Überstände 4 gepresst. Jedes Einzelblech 8 wird einzeln aufgepresst, um die axiale Fügekraft zu reduzieren, die bei einer massiven Kurzschlussscheibe notwendig wäre.

Die Nuten 14 des Blechpakets 9 des Läufers 5 sind zu einem Luftspalt 16 hin geschlossen ausgeführt, ebenso ist es möglich diese Nuten 14 zumindest teilgeöffnet in Richtung Luftspalt 16 auszuführen. Die Leiterstäbe 6, insbesondere Kupfer, sind dabei in diese Nuten 14 axial eingesetzt.

Die Querschnittsform 19 der Ausnehmungen 20 der Einzelbleche 8 weisen bezüglich den Querschnittsform 18 der Leiterstäbe 6 zumindest abschnittsweise ein Untermaß auf, so dass ein Pressvorgang zur Kontaktierung von Leiterstäben 6 und Einzelblechen 8 notwendig ist.

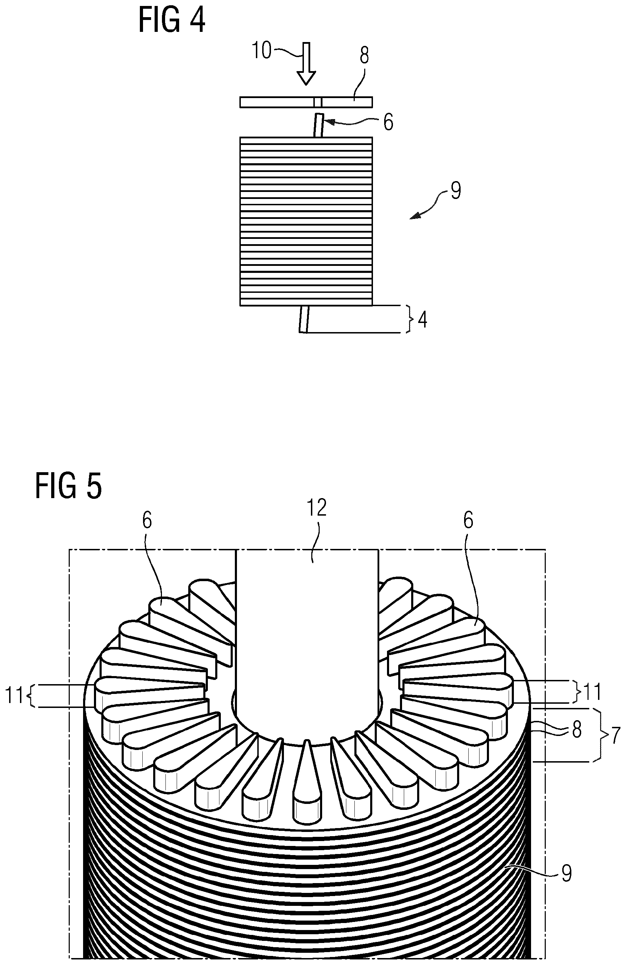

FIG 4 zeigt in einer prinzipiellen Darstellung einen Montagevorgang eines Einzelbleches 8 auf einen Leiterstab 6 bzw. dessen Überstand 4, wobei der Leiterstab 6 in dem Blechpaket 9 auf einer vorgegebenen Nutschrägung des Läufers 5 geschrägt angeordnet ist. Aufgrund des Einzelbleches 8 ist die Kraft für das axiale Aufschieben 10 vergleichsweise gering, so dass ein Knicken des Leiterstabes 6 im Bereich seines Überstandes 4 ausgeschlossen ist.

FIG 5 zeigt in einer teilperspektivischen Darstellung einen Läufer 5 mit seinem Blechpaket 9, wobei ein Kurzschlussring 7 durch Einzelbleche 8 bereits aufgebracht wurde. Aus dem Kurzschlussring 7 ragen axial die Leiterstäbe 6, die so im Betrieb der Asynchronmaschine 1 für Luftverwirbelungen sorgen und damit eine Kühlwirkung entfalten. Das Blechpaket 9 des Läufers 5 ist in dieser Ausführung mit einer Welle 12 drehfest verbunden, insbesondere aufgeschrumpft.

FIG 6 zeigt einen Querschnitt eines Leiterstabs 6 und eine Ausnehmung 20 eines Einzelblechs 8. Dabei ist das Übermaß 17 des Leiterstabs 6 gezeigt, der so zu einer Pressung und Mikroverschweißung mit den jeweiligen Einzelblechen 8 führt.

Das Übermaß 17 ist dabei in dieser Ausführung so gewählt, dass die Querschnittsform des Leiterstabes 6 und die Querschnittsform der Ausnehmung 20 des Einzelbleches 8 identisch sind. Dabei ist die Dimensionierung der Querschnittsform des Einzelbleches 8 zur Erhaltung des Übermaßes etwas größer ausgestaltet, um eine Presspassung zu erhalten.

FIG 7 wird bei ähnlicher Querschnittsform 18 des Leiterstabes 6 die Ausnehmung 20 des Einzelbleche 8 so ausgeführt, dass ein Übermaß lediglich an gewissen Abschnitten auftritt. Damit wird auch nur an diesen Abschnitten ein späterer Stromfluss von Leiterstab 6 auf das Einzelbleche 8 zu benachbarten Leiterstäbe 6 ermöglicht.

Die Querschnittsformen der Ausnehmung 20, als auch der Leiterstäbe 6 müssen dabei nicht identisch sein und/oder über den gesamten Umfang ein Übermaß aufweisen, sondern es können auch nur abschnittsweise Bereiche mit Übermaß an den Leiterstäben 6 vorhanden sein.

Derartige Rotoren 5 mit erfindungsgemäßen Kurzschlussläufern werden bei Asynchronmaschinen 1 eingesetzt, die als Antriebssystem, insbesondere für Kompressoren, Verdichter, Förderanlagen, oder Fahrzeugantriebe vorgesehen sind. Aufgrund der hohen Betriebsdauern derartiger Antriebssysteme ist dabei eine hohe Effizienz der Antriebssysteme kundenseitig von Vorteil, indem Energiekosten eingespart und/oder Batteriesysteme bei Fahrzeugen höhere Reichweiten ermöglichen.

## Patentansprüche

1. Verfahren zur Herstellung eines Kurzschlussläufers (5) einer Asynchronmaschine (1) durch folgende Schritte:
- Bereitstellen eines Blechpakets (9) des Läufers (5) mit im Wesentlichen axial verlaufenden Nuten (14),
- einsetzen von Leiterstäben (6) in die Nuten (14) aus einem ersten leitfähigen Material, derart, dass die Leiterstäbe (6) aus den Stirnseiten (15) des Blechpakets (9) ragen,
- Bereitstellen einer vorgebbaren Anzahl von vorgestanzten Einzelblechen (8) mit jeweils vorgegebener Kontur aus einem zweiten leitfähigen Material,
- einzelnes, axiales Aufpressen (10) dieser Einzelbleche (8) nacheinander, auf die aus der Stirnseite (15) des Blechpakets (9) ragenden Leiterstäbe (6), wobei die Einzelbleche (8) die aus einer Stirnseite (15) ragenden Leiterstäbe (6) kurzschließen und somit einen Kurzschlussring (7) bilden.

2. Verfahren zur Herstellung eines Kurzschlussläufers (5) nach Anspruch 1, **dadurch gekennzeich-net**, dass die Leiterstäbe (6) in den Nuten (14) zumindest abschnittsweise an den Seitenwänden der jeweiligen Nut (14) anliegen, indem die Leiterstäbe (6) durch das axiale Aufpressen der Einzelbleche (8) oder durch einen separaten Verstemmprozess in den Nuten (14) fixiert werden.

3. Verfahren zur Herstellung eines Kurzschlussläufers (5) nach einem der vorhergehenden Ansprüche, **dadurch gekennzeichnet , dass** die Einzelbleche (8) eine vorgebbare Anzahl Ausnehmungen (20) aufweisen, die der Anzahl der Nuten (14) entspricht.

4. Verfahren zur Herstellung eines Kurzschlussläufers (5) nach einem der vorhergehenden Ansprüche, **dadurch gekennzeichnet , dass** die Leiterstäbe (6) gegenüber den Ausnehmungen (20) zumindest abschnittsweise ein Übermaß aufweisen, so dass bei einem axialen Fügevorgang (10), die zulässigen Scherspannungen des ersten leitfähigen Materials der Leiterstäbe (6) und des zweiten leitfähigen Materials der Einzelbleche (8) lokal überschritten werden und dabei Stoffübergänge durch Diffusion an der Grenzfläche zwischen Leiterstab (6) und Einzelblech (8) verursacht werden, die zu einer Mikroverschweißung von Leiterstab (6) und jeweiligem Einzelblech (8) führen.

5. Verfahren zur Herstellung eines Kurzschlussläufers (5) nach einem der vorhergehenden Ansprüche, **dadurch gekennzeichnet , dass** das erste Material vorzugsweise Kupfer oder eine Kupferlegierung ist und das zweite Material vorzugsweise Aluminium, Kupfer oder eine Aluminium- oder Kupferlegierung ist.

6. Verfahren zur Herstellung eines Kurzschlussläufers (5) nach einem der vorhergehenden Ansprüche, **dadurch gekennzeichnet , dass** die Leiterstäbe (6), insbesondere im Bereich der Überstände (4), angeschrägt sind, sich also in ihrem Umfang verringern.

7. Verfahren zur Herstellung eines Kurzschlussläufers (5) nach einem der vorhergehenden Ansprüche, **dadurch gekennzeichnet , dass** die Einzelbleche (8) im Bereich der Leiterstäbe (6) Ausnehmungen (20) aufweisen, deren Querschnittsformen im Wesentlichen denen der Leiterstäbe (6) entsprechen, wobei die Querschnittsformen der Leiterstäbe (6) zumindest abschnittsweise größer als die der Ausnehmungen (20) ausgeführt sind, also ein Übermaß aufweisen, um eine Mikroverschweißung zwischen Leiterstab (6) und jeweiligen Einzelblechen (8) zu erhalten.

8. Verfahren zur Herstellung eines Kurzschlussläufers (5) nach einem der vorhergehenden Ansprüche, **dadurch gekennzeichnet , dass** zumindest ein Leiterstab (6) aus gezogenem Elektrokupfer mit einem Leitwert von mindestens 58 MS/m vorgesehen ist.

9. Verfahren zur Herstellung eines Kurzschlussläufers (5) nach einem der vorhergehenden Ansprüche, **dadurch gekennzeichnet , dass** der Kurzschlussläufer (5) durch eine gleichzeitige und/oder nachträgliche Wärmebehandlung die Dehngrenze der Einzelbleche (8) gesteigert wird und/oder die Leitfähigkeit zwischen Leiterstab (6) und Einzelblech (8) vergrößert wird.

10. Verfahren zur Herstellung eines Kurzschlussläufers (5) nach einem der vorhergehenden Ansprüche, **dadurch gekennzeichnet , dass** die Einzelbleche (8) gestanzt sind.

11. Verfahren zur Herstellung eines Kurzschlussläufers (5) nach einem der vorhergehenden Ansprüche, **dadurch gekennzeichnet , dass** die Ausnehmungen (20) der Einzelbleche (8) eine geschlossene Kontur oder eine geschlitzte Kontur aufweisen.

12. Kurzschlussläufer (5) hergestellt nach einem der vorhergehenden Ansprüche, wobei der Kurzschlussring (7) direkt am Blechpaket (9) anliegt oder davon beabstandet ist.

13. Kurzschlussläufer (5) nach Anspruch 12, wobei die Einzelbleche (8) des Kurzschlussringes (7) nur über die jeweiligen Leiterstäbe (6) elektrisch miteinander in Kontakt stehen.

14. Asynchronmaschine (1) mit einem Kurzschlussläufer (5) nach Anspruch 12 oder 13.

15. Antriebssystem, insbesondere für Kompressoren, Verdichter, Förderanlagen, oder Fahrzeugantriebe mit zumindest einer Asynchronmaschine (1) nach Anspruch 14.
